Europäisches Patentamt

(19) European Patent Office

Office européen des brevets

(11) Numéro de publication: **0 238 430**
**A1**

(12) ## DEMANDE DE BREVET EUROPEEN

(21) Numéro de dépôt: 87460002.6

(22) Date de dépôt: 02.03.87

(51) Int. Cl.³: **A 23 N 15/00**
**A 23 N 15/04**

(30) Priorité: 03.03.86 FR 8603051

(43) Date de publication de la demande:
23.09.87 Bulletin 87/39

(84) Etats contractants désignés:
AT BE DE ES GB IT LU NL

(71) Demandeur: **CUMA L'HERMINE**
**Lanveur Plounéour-Trez**
**F-29238 Brignogan Plage(FR)**

(72) Inventeur: **Hautier, Claude Marie Robert**
**47, Boulevard St Aignan**
**F-44100 Nantes(FR)**

(74) Mandataire: **Martin, Jean-Jacques et al,**
**Cabinet REGIMBEAU 11, rue Franz Heller**
**F-35700 Rennes(FR)**

(54) **Installation pour parer des endives ou des légumes similaires.**

(57) Installation à action pneumatique pour parer des endives ou des légumes similaires fragiles.

Cette installation comprend un dispositif de convoyage (1) circulant en continu qui est agencé pour amener une à une les endives à des postes successifs d'alignement longitudinal (3) de coupe du pied (4), d'effeuillage superficiel par voie pneumatique (5), d'évacuation des feuilles arrachées impropres (6) et de réception des endives parées (9).

Industrie agro-alimentaire.

FIG.1

INSTALLATION POUR PARER DES ENDIVES OU DES LEGUMES **0238430**
SIMILAIRES

La présente invention concerne une installation pour parer des endives ou des légumes similaires.

Après forçage des endives à l'obscurité, dans des bacs de forçage, on les sépare en général manuellement de leur racine – ou "carotte" – en les cassant à leur base. Après cette opération, les endives présentent un pied de forme irrégulière pourvu de petites feuilles noirâtres impropres à la consommation ; en outre, plusieurs feuilles périphériques plus longues, s'étendant sur les flancs du corps même de l'endive, possèdent également un aspect sale et un contour irrégulier, et il convient de les éliminer.

L'opération de parement des endives consiste à réaliser une coupe nette de la base du pied de l'endive et à enlever les feuilles impropres ; ainsi, l'endive obtenue est directement consommable ; elle présente de plus un bel aspect favorable à la vente et à une bonne conservation.

Actuellement cette opération est réalisée manuellement, ce qui la rend excessivement fastidieuse et coûteuse. Les tentatives de mécanisation qui ont été faites jusqu'à présent n'ont pas donné satisfaction en raison de l'extrême fragilité des endives. En effet, un impact ou un effort de pression, même faible, se produisant sur le corps d'une endive provoque une oxydation rapide de la zone touchée, entraînant sa dévalorisation commerciale et limitant la durée de sa conservation. C'est pourquoi certaines techniques d'effeuillage mécanique, à lames et crochets, déjà proposées pour des légumes voisins, ne sont pas applicables pour le parement des endives.

L'invention vise à résoudre ce problème en proposant une installation mécanisée qui permette d'obtenir des endives parées d'aspect impeccable, avec un rendement élevé, sans provoquer des blessures superficielles des endives.

Ce résultat est atteint conformément à l'invention, par le fait que l'installation comprend un dispositif de convoyage circulant en continu qui est agencé pour amener une à une les endives à des postes successifs d'alignement longitudinal, de coupe du pied, d'effeuillage superficiel par voie pneumatique, d'évacuation des feuilles arrachées impropres, et de réception des endives parées.

Dans un mode de réalisation préférentiel, l'installation comporte une série auxiliaire de postes d'alignement longitudinal, de coupe du pied, d'effeuillage superficiel par voie pneumatique, et d'évacuation des feuilles arrachées impropres, cette seconde série de postes permettant au besoin de réaliser un double parement des endives ; ce double parement peut être utile lorsqu'on a affaire notamment à des endives particulièrement grosses ou possèdant de nombreuses feuilles périphériques impropres.

Selon une autre caractéristique de l'invention, l'installation comporte un poste de prélèvement automatique des endives impropres, qui est situé en amont du poste d'alignement longitudinal ; ceci évite que ces endives impropres, de taille réduite, ou de forme trop irrégulière, ne pénètrent dans l'installation proprement dite, en risquant de se casser ou de n'être pas correctement effeuillées au cours de leur convoyage.

Selon une autre caractéristique de l'invention, l'installation est équipée avantageusement d'un dispositif de détection de la longueur des endives et/ou de leur positionnement longitudinal sur le dispositif de convoyage, ce dispositif de détection étant situé en amont du poste de prélèvement et étant connecté à un automate programmable agencé pour commander en cas de besoin le prélèvement prématuré des endives ou leur double parement par actionnement de ladite série de postes auxiliaires.

3

0238430

Dans un mode de réalisation particulièrement simple de l'invention, le dispositif de convoyage est constitué par une chaîne sans fin mobile qui circule dans un rail de guidage, cette chaîne portant une série de berceaux régulièrement répartis le long de la chaîne, et adaptés pour recevoir chacun une endive.

Selon une caractéristique intéressante de l'invention, chaque berceau est composé d'une paire de rouleaux d'appui qui sont montés fous sur leur axe, ces rouleaux étant disposés côte à côte, parallèlement l'un à l'autre, et perpendiculairement à la direction d'avance du dispositif de convoyage. Ces rouleaux sont avantageusement revêtus d'un matériau amortisseur, par exemple d'un manchon en caoutchouc souple, de qualité "alimentaire", qui limite au maximum les risques de blessures superficielles des endives.

Selon une autre caractéristique de l'invention, chaque rouleau d'appui est monté en porte-à-faux sur un levier articulé, les deux rouleaux d'appui d'un même berceau pouvant être écartés l'un de l'autre par pivotement de ces leviers symétriquement vers l'extérieur, à l'encontre de ressorts de rappel, tout en restant parallèles l'un à l'autre. On comprendra qu'ainsi, en écartant l'un de l'autre les deux rouleaux d'appui, d'une distance d'écartement supérieure au diamètre de l'endive, on peut réaliser l'évacuation de cette endive, qui tombe tout en gardant une position horizontale, ce qui réduit les chocs au moment de la chute.

Pour réduire le risque d'un échappement latéral des endives au cours de leur convoyage, à chaque rouleau d'appui on associe avantageusement une tige parallèle au rouleau, située vers l'extérieur du berceau, cette tige formant garde-corps.

Selon une autre caractéristique, le poste de réception des endives parées et, éventuellement, le poste de prélèvement des endives impropres, sont pourvus d'un dispositif écarteur comprenant une came mobile apte à coopérer avec des têtons solidaires des leviers articulés, afin d'écarter l'un de l'autre les rouleaux d'appui et de permettre la chute de l'endive supportée par ces derniers. Ainsi la commande de l'évacuation des endives se fait de manière particulièrement simple.

Selon une autre caractéristique de l'invention, le poste d'alignement longitudinal comprend des premiers moyens pneumatiques adaptés pour insuffler de l'air comprimé sur les endives de manière à les décaler angulairement par rapport à l'axe des rouleaux d'appui, des seconds moyens commandant la rotation de ces rouleaux d'appui sur leur axe dans un sens tel qu'il provoque le déplacement longitudinal des endives, dans la direction où est tournée leur pied, et une plaque d'arrêt disposée le long du rail de guidage de la chaîne de convoyage, cette plaque servant de butée d'alignement pour les pieds d'endives.

Il est ainsi assuré que l'ensemble des endives qui se présentent successivement au poste de coupe du pied se trouvent dans une position longitudinale identique par rapport au plan de coupe.

La plaque d'arrêt est avantageusement ajustable suivant une direction parallèle à l'axe des rouleaux, de telle manière qu'il soit possible de modifier la position du plan de coupe en fonction de la catégorie d'endives traitées.

Le poste de coupe du pied comprend de préférence une lame mobile qui est actionnée par des organes de commande adaptés pour réaliser un mouvement aller retour à grande vitesse de cette lame au travers des pieds d'endives. Grâce à cet arrangement particulier, il est inutile de maintenir positivement l'endive au poste de coupe, au moyen d'organes de préhension qui risqueraient de la blesser superficiellement, l'immobilisation des endives au moment de la coupe étant assurée simplement par leur inertie propre.

Ces organes de commande comprennent par exemple un jeu de biellettes formant une genouillère, qui est actionnée par un vérin pneumatique de telle manière qu'à une seule course aller ou retour de la tige de vérin correspondent les deux courses aller et retour de la lame.

On résoud ainsi le problème du temps d'arrêt qui se produit inévitablement, en raison des inerties mécaniques et électromécaniques, au moment du changement de sens de la course du vérin.

Selon une caractéristique importante de l'invention, le poste d'effeuillage superficiel comprend des premiers moyens pneumatiques adaptés pour insuffler de l'air axialement sur l'extrémité coupée des pieds d'endives, des seconds moyens pneumatiques adaptés pour insuffler de l'air latéralement sur le corps des endives, et des moyens de mise en rotation des rouleaux d'appui supportant les endives. Grâce à cet ensemble de moyens, les feuilles périphériques impropres, dont une grande partie est déjà plus ou moins séparée de la base de l'endive suite à la coupe du pied, se trouvent gonflées par l'air comprimé, et séparées progressivement du reste de l'endive. Les feuilles séparées peuvent éventuellement être récupérées pour être vendues en vrac ou pour d'autres utilisations.

Selon une autre caractéristique, le poste d'évacuation des feuilles arrachées impropres comprend un ventilateur disposé au-dessus ou au-dessous de la trajectoire des endives et agencé pour générer un flux d'air vertical apte à transporter ces feuilles dans un conduit récupérateur disposé de l'autre côté de cette trajectoire ; la puissance de ce flux d'air est choisie naturellement de telle manière qu'il soit suffisant pour emporter les feuilles détachées, mais soit insuffisant pour éjecter les endives parées reposant sur le convoyeur.

A la sortie de ce poste d'évacuation des feuilles, l'installation est avantageusement équipée d'un poste de pulvérisation d'un produit conservateur sur les endives, ce produit pouvant par exemple être une solution aqueuse d'acide citrique.

Le poste de réception des endives parées et, éventuellement, le poste de prélèvement des endives impropres, comprennent par exemple une rampe inclinée descendant sur une bande transporteuse. Ainsi, le transfert des endives se fait de manière douce, par roulement sur les plans inclinés, et réception sans choc sur les bandes transporteuses.

D'autres caractéristiques et avantages de l'invention apparaîtront de la description et des dessins annexés qui en présentent un mode de réalisation préférentiel.

Sur ces dessins :

- la figure 1 représente schématiquement une vue générale de l'installation ;

- la figure 2 est une vue de face d'un berceau composé d'une paire de rouleaux d'appui, ce berceau étant monté sur la chaîne de convoyage ;

- la figure 3 est une vue similaire à la figure 2, qui montre le mouvement d'écartement des rouleaux d'appui, en vue de l'évacuation d'une endive ;

- la figure 4 est une vue latérale, partiellement coupée, du berceau de la figure 2 ;

- la figure 5 est une vue de dessus schématique de l'installation, destinée à expliquer le fonctionnement du dispositif de détection de la longueur des endives et/ou de leur positionnement longitudinal ;

- la figure 6 est une vue de dessus schématique du poste d'alignement longitudinal des endives ;

- la figure 7 est une vue schématique du dispositif de coupe du pied, destinée à expliquer le fonctionnement des organes de commande de la lame de coupe ;

- la figure 8 est une vue de côté schématique partielle de la figure 7 ;

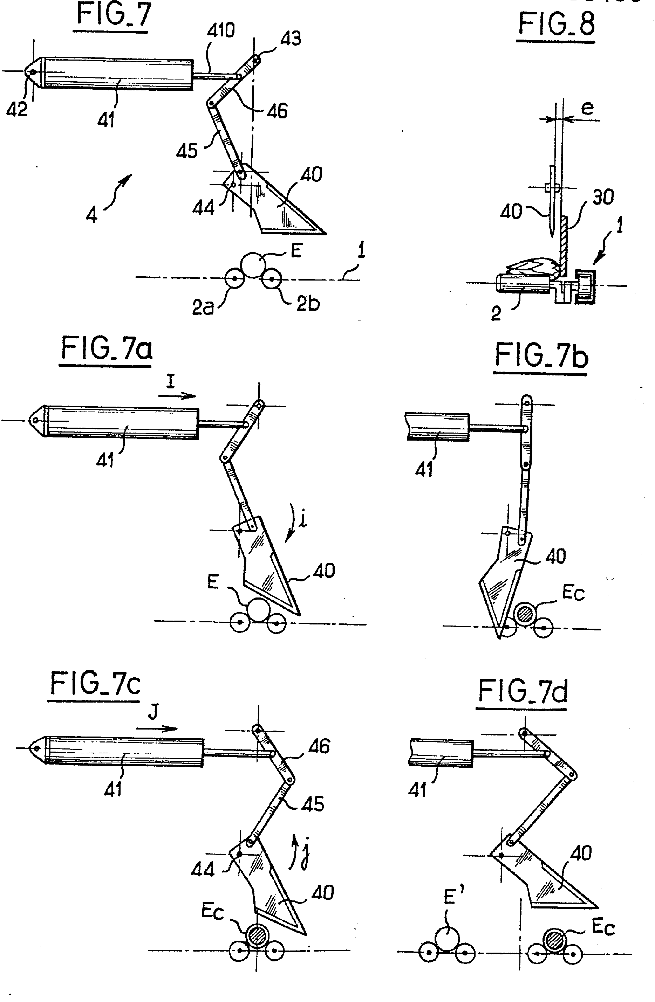

- les figures 7a, 7b, 7c et 7d sont des vues analogues à la figure 7, illustrant les différentes étapes de la coupe.

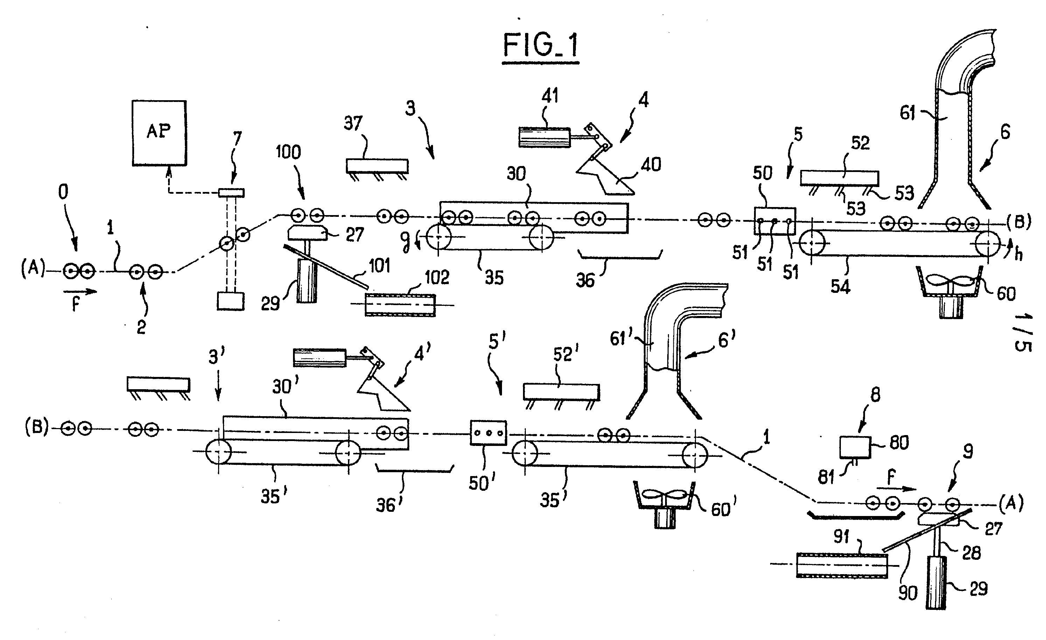

Sur les figures, le dispositif de convoyage des endives porte la référence 1. Il s'agit d'un dispositif de convoyage en circuit fermé, si bien que les deux tronçons de trajectoire représentés l'un sur l'autre à la figure 1, dans un but de commodité de représentation, sont en réalité raccordés l'un à l'autre, les raccordements se faisant au niveau des lettres A, A et B, B.

Ce dispositif de convoyage porte une pluralité d'organes récepteurs d'endives, qui seront appelés berceaux et qui portent la référence 2 ; ces berceaux sont répartis régulièrement tout le long du convoyeur 1 ; ils sont par exemple au nombre de soixante.

Le convoyeur se déplace dans le sens de la flèche f, c'est-à-dire de gauche à droite à la figure 1.

Le déplacement se fait de manière continue, à vitesse constante, cette vitesse étant par exemple de l'ordre de 0,2 m/s. Les moyens d'entraînement du convoyeur, non représentés, sont constitués par exemple par un moteur électrique.

Sur la figure 1, on a désigné par la référence 0 le poste de mise en place manuel des endives à parer sur les berceaux, par la référence 7 le dispositif de détection de la longueur des endives et/ou de leur positionnement longitudinal, par la référence 100 le poste de prélèvement des endives impropres, par la référence 3 le poste d'alignement longitudinal, par la référence 4 le poste de coupe de la base du pied, par la référence 5 le poste d'effeuillage superficiel par voie pneumatique, par la référence 6 le poste d'évacuation des feuilles arrachées impropres, par la référence 3' le poste auxiliaire d'alignement longitudinal (qui est identique au poste 3), par la référence 4' le poste auxiliaire de coupe de la base du pied (qui est identique au poste 4), par la référence 5' le poste auxiliare d'effeuillage superficiel par voie pneumatique (qui est identique au poste 5), par la référence 6' le poste d'évacuation des feuilles arrachées impropres (qui est identiques au poste 6), par la référence 8 le poste de pulvérisation d'un produit conservateur sur les endives, et par la référence 9 le poste de réception des endives parées.

La configuration de l'installation est naturellement variable, et peut être conçue en fonction de la configuration du bâtiment qui doit la recevoir ; on peut par exemple installer le convoyeur 1 autour d'un bâti de forme générale rectangulaire, les côtés de ce rectangle pouvant recevoir par exemple le premier les postes 0, 7 et 100, le second les postes 3, 4 et 5, le troisième les postes 6, 3' et 4', et le quatrième les postes 5', 6', 8 et 9. La hauteur du convoyeur par rapport au sol pourra naturellement être modifiée pour tenir compte de la commodité d'utilisation de l'installation, c'est ainsi par exemple que le poste 0 de mise en place des endives avant traitement, ainsi que le poste 9 de réception des endives parées, pourront être situés à un niveau
plus bas que le reste du convoyeur.

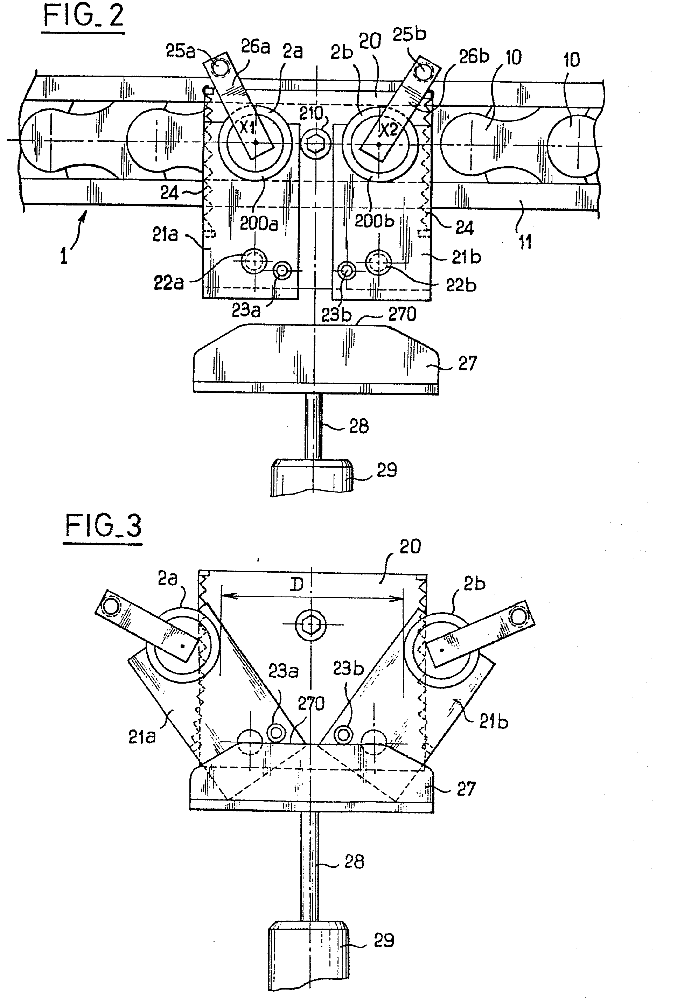

Comme on le voit à la figure 2, le convoyeur 1 est
constitué d'une chaîne de type traditionnel, comprenant
une série de maillons 10, par exemple en nylon, articulés
les uns aux autres, cette chaîne étant guidée dans une
glissière en U 11. Sur certains des maillons 10 sont
fixés, par exemple au moyen de vis, des berceaux 2 de
réception des endives. Chaque berceau 2 est formé d'une
paire de rouleaux symétriques 2a, 2b, d'axe horizontal $X_1$, respectivement $X_2$ perpendiculaire à la glissière 11, ces
rouleaux étant montés fous sur un arbre qui est monté
en porte-à-faux sur un levier 21a, respectivement 21b ;
chacun des leviers 21a, 21b est articulé, par l'intermédiaire d'un axe 22 parallèle à l'axe des rouleaux, sur
une plaque de montage 20 fixée au maillon 10 de la chaîne.
Les rouleaux 2a, 2b sont revêtus d'une gaine 200a, 200b,
en matériau souple et élastique, par exemple en caoutchouc
"alimentaire". A chaque rouleau est associée une tige 25a,
25b, située sensiblement au-dessus du niveau du rouleau,
vers l'extérieur du berceau, cette tige s'étendant parallèlement au rouleau ; elle est fixée à l'arbre du rouleau par l'intermédiaire d'un maneton 26a, respectivement 26b. Les rouleaux 2a, 2b se trouvent normalement
côte à côte, à faible distance l'un de l'autre ; cette
distance est déterminée par un têton 210 formant butée
d'arrêt pour le pivotement des leviers 21a, 21b dans le
sens du rapprochement des deux rouleaux ; ce têton de
butée 210 est fixé à la plaque de montage 20 du berceau.
Des ressorts latéraux 24, dont une extrémité est accrochée à cette plaque 20, et l'autre extrémité au levier
21a, respectivement 21b, agissent sur ces leviers pour maintenir les deux rouleaux rapprochés l'un de l'autre. Dans cette position normale, l'écartement entre les deux rouleaux 2a, 2b est inférieur au diamètre des plus petites endives traitées, de sorte que celles-ci peuvent reposer sur les rouleaux d'appui 2a, 2b, sans possibilité de chute vers le bas ; en outre, les tiges 25a, 25b, qui forment garde-corps contrarient l'échappement latéral inopiné des endives.

A la partie inférieure de chacun des leviers 21a, 21b, est monté un têton ou galet 23a, respectivement 23b, dont la position est décalée vers l'intérieur du berceau par rapport à l'axe d'articulation 22a, 22b du levier correspondant.

Aux postes dans lesquels on réalise l'évacuation des endives, en l'occurence au poste de prélèvement automatique des endives impropres et au poste de réception des endives parées, on a prévu un dispositif écarteur disposé sous la trajectoire des berceaux ; ce dispositif écarteur comprend un vérin pneumatique 29, dont la tige 28 est mobile en translation en direction verticale ; la tige 28 porte une came d'écartement 27 située au-dessous des deux têtons 23a, 23b ; cette came présente une face active horizontale, adaptée pour venir en contact avec les têtons 23a et 23b lorsqu'on provoque l'extension du vérin 29, et pour faire pivoter symétriquement les deux leviers 21a, 21b dans le sens de l'écartement des deux rouleaux 2a, 2b, de manière à provoquer la chute de l'endive entre ces deux rouleaux ; la figure 3 représente les deux rouleaux en position écartée, l'écartement mutuel D des deux rouleaux étant dans cette position supérieur au plus grand diamètre des endives traitées. Au cours de leur écartement, les deux rouleaux restent parfaitement parallèles, si bien que l'endive tombe en restant dans un plan horizontal, évitant les chocs "en bout" au cours de la chute.

La chaîne se déplaçant en continu, le temps de relèvement et d'abaissement de la came 27 est très bref, les têtons 23a, 23b glissant ou roulant sur la surface de came 270 pendant l'opération d'évacuation de l'endive.

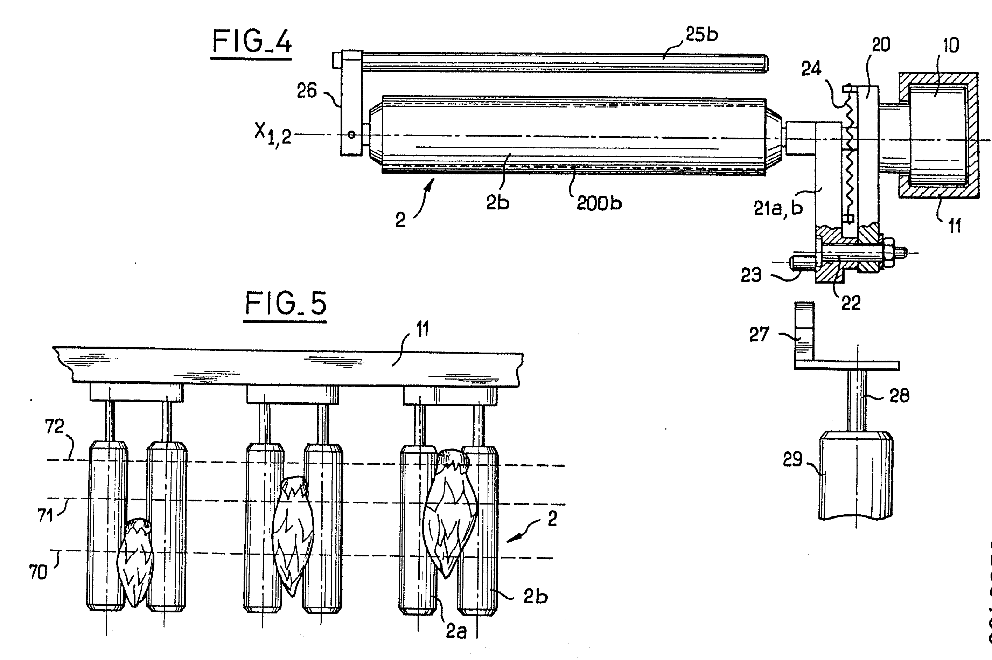

La figure 5 illustre le fonctionnement du dispositif de détection 7. Ce dispositif comprend par exemple trois séries de cellules photo-électriques balayant chacune une zone différente des berceaux 2, dans le sens de leur longueur ; ces zones de balayage sont représentées par les traits interrompus 70, 71 et 72. On constate que selon la taille et le positionnement des endives dans les berceaux 2, la présence de l'endive est détectée soit par l'une seulement des cellules photo-électriques, soit par deux des cellules, soit par les trois cellules. Les signaux détectés sont transmis à un automate programmable AP qui tient compte de cette information pour piloter de manière appropriée les différents postes de l'installation, en tenant compte par conséquent de la taille et du positionnement initial de l'endive, comme on le verra plus loin au cours de la description complète du fonctionnement de l'installation.

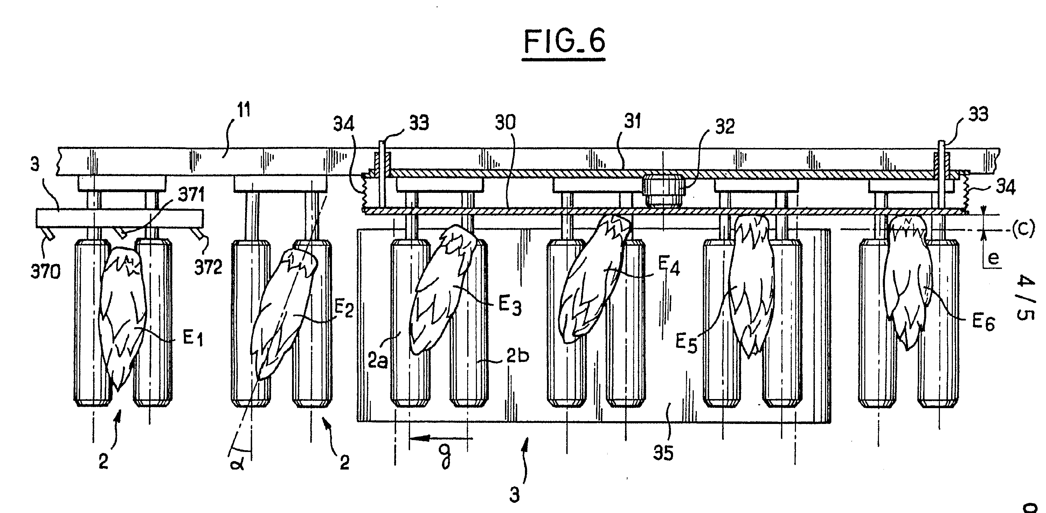

La figure 6 représente le poste d'alignement longitudinal des endives, poste qui précède le poste de coupe du pied. Ce poste est pourvu d'un dispositif d'insufflation d'air comprimé 37, comportant plusieurs buses de sortie de jets d'air 370, 371, 372, fixées au-dessus de la trajectoire des endives, à l'aplomb de l'extrémité des rouleaux 2a, 2b situés du côté du convoyeur 1. En aval de ce dispositif 37 est montée une plaque d'arrêt 30, disposée verticalement, parallèlement au rail de guidage 11, à faible distance de l'extrémité des rouleaux 2a, 2b. Cette plaque 30 est guidée en translation, par des tiges 33, suivant l'axe des rouleaux ; le déplacement de la plaque 30, en vue de son ajustement, est réalisé par une capsule pneumatique (vérin plat) 32 interposée entre cette plaque et une plaque fixe 31 ; des ressorts de traction latéraux 34 assurent la retenue de la plaque 30, compensant l'action du vérin 32.

Le plan dans lequel se fait la coupe de la base du pied, au poste suivant, est représenté sur la figure 6 par un trait mixte fort et est référencé (C). On comprendra aisément qu'en faisant varier la pression dans le vérin pneumatique 32 on peut régler l'écartement (e) de la plaque 30 par rapport au plan de coupe (C).

Sous la trajectoire des berceaux 2, est placé un moyen de mise en rotation des rouleaux 2a,. 2b ; dans la forme de réalisation représentée, il s'agit d'une bande sans fin 35, qui vient en appui contre le dessous de ces rouleaux, sur une certaine longueur de trajectoire, qui correspond par exemple au passage de trois berceaux ; cette bande est entraînée par des moyens appropriés (non représentés) de telle sorte que son brin supérieur se déplace en sens contraire à celui du convoyeur 1 (flèche g à la figure 6). La bande 35 fait donc tourner les rouleaux 2a, 2b sur eux-mêmes, lorsqu'ils passent au-dessus de cette bande.

Ce poste fonctionne de la manière suivante :
Les endives arrivent à ce poste, dans une position telle que leur direction longitudinale coïncide à peu près avec celui des rouleaux d'appui 2a, 2b (endive $E_1$). Dès qu'elles ont dépassé le dispositif 37, ce dernier est actionné, par des moyens d'alimentation appropriés en air comprimé, de telle sorte que des jets d'air successifs sont envoyés sur le pied de l'endive par les buses 370, 371, et 372 ; ces jets d'air repoussent latéralement le pied de l'endive de sorte qu'elle est décalée angulairement d'un angle $\alpha$ par rapport à la direction longitudinale des rouleaux d'appui (endive $E_2$). Ensuite les rouleaux arrivant au-dessus de la bande 35 sont mis en rotation. Du fait que l'endive est décalée angulairement par rapport à l'axe des rouleaux, la rotation de ces derniers provoque le déplacement axial de l'endive par un effet analogue à un vissage (endive $E_3$). Le déplacement de l'endive, dans le sens de son pied, se poursuivant, ce pied arrive en contact avec la plaque formant butée 30 (endive $E_4$). En raison de cet appui du pied de l'endive, le mouvement des berceaux 2 parallèlement à la plaque se poursuivant, l'endive est redressée, et retrouve une position parallèle au rouleau d'appui (endive $E_5$). Les rouleaux d'appui quittent alors la bande sans fin mobile 35, et l'endive est correctement alignée longitudinalement, prête à subir la coupe de son pied (endive $E_6$).

On comprend aisément que grâce à cet arrangement, le plan de coupe de l'ensemble des endives sera situé à la même distance (e) de l'extrémité de leur pied.

On notera que ce dispositif d'alignement est auto-correcteur ; en effet, si le redressement de l'endive arrivant en butée contre la plaque d'arrêt est excessif (au-delà de l'axe des rouleaux), cette endive est à nouveau écartée de la plaque par suite de la rotation des rouleaux et l'insufflation d'air peut corriger ce décalage de l'endive "en sens contraire".

Les figures 7 et 8 représentent schématiquement le dispositif de coupe du pied de l'endive. Ce dispositif comprend une lame tranchante 40 de forme générale en V, dont les deux bords sont coupants. Cette lame est articulée autour d'un axe fixe 44 parallèle à l'axe des rouleaux, et située au-dessus de la trajectoire des endives, à l'aplomb de la base de leur pied, c'est-à-dire légèrement à l'extérieur des rouleaux 2a, 2b, de telle manière que ces rouleaux ne contrarient pas le passage de la lame durant la coupe. Les organes de commande de la lame comprennent une paire de biellettes 45, 46, formant une genouillère, cette dernière étant actionnée par un vérin pneumatique à double effet 41 ; celui-ci est articulé autour d'un axe fixe 42 ; la tige de vérin 410 agit sur la biellette 46 elle-même articulée autour d'un axe fixe 43.

A la figure 7, la lame se trouve en position inactive, dans l'attente du passage d'une endive E.

Les figures 7a, 7b, 7c, et 7d illustrent le fonctionnement du dispositif de coupe. Lorsqu'on provoque l'extension du vérin (flèche I, figure 7a), la genouillère se déforme et fait pivoter la lame 40 dans le sens de la coupe (flèche i). A la figure 7b, la lame 40 vient de terminer sa course aller au cours de laquelle elle a coupé la base du pied de l'endive ; l'extension du vérin se poursuivant (flèche J, figure 7c), la genouillère 45, 46 provoque la remontée de la lame 40 (flèche j), laquelle retrouve ensuite sa position initiale (figure 7d).

Le mouvement de coupe est réalisé de manière extrêmement rapide, par exemple de l'ordre de 1/10ème de seconde, de telle sorte que l'inertie de l'endive empêche qu'elle soit déplacée par la lame durant la coupe ; en outre, du fait que les deux faces de la lame 40 sont tranchante, .le retour de la lame n'est pas contrarié par le déplacement de l'endive dans son berceau (qui poursuit sa trajectoire de convoyage en continu durant la coupe).

A la figure 7d, le dispositif est prêt pour la coupe de l'endive suivante E', cette coupe se faisant cette fois par rétraction du vérin 41 (et ainsi de suite).

Les postes 5 d'effeuillage après coupe, et 6 d'évacuation des feuilles arrachées, sont représentés à la figure 1.

Le poste d'effeuillage superficiel 5 comprend deux dispositifs d'insufflation d'air 50, 52, alimentés en air comprimé par une source appropriée (non représentée). Le dispositif 50, situé en amont du dispositif 52, comprend une ou plusieurs buses 51, placées de telle manière qu'elles insufflent des jets d'air sur l'extrémité fraîchement coupée des pieds d'endives qui se déplacent devant ces buses. Le dispositif 52 présente une série de buses 53 qui sont positionnées de manière à envoyer des jets d'air comprimé sur les flancs des corps d'endives passant à proximité.

En arrivant en vis-à-vis du dispositif d'insufflation 52, les berceaux 2 passent sur une bande sans fin mobile 54, qui provoque la rotation sur eux-mêmes des rouleaux 2a, 2b composant ces berceaux ; cette mise en rotation s'effectue de manière tout à fait similaire à celle décrite précédemment relativement au poste d'alignement des endives ; la bande 54 est entraînée par des moyens appropriés non représentés, par exemple par un moteur électrique (flèche h). Cette bande mobile 54 se prolonge jusqu'au poste 6 d'évacuation des feuilles arrachées.

Le poste 6 comprend un ventilateur 60, dont les pales tournent autour d'un axe vertical ; ce ventilateur est situé sous la trajectoire des berceaux 2, et, dans la forme de réalisation représentée, est agencé pour générer un flux d'air ascendant, qui traverse la trajectoire des berceaux ; au-dessus de cette trajectoire, se trouve un conduit 61 recevant le flux ascendant.

Le dispositif d'insufflation "en bout" 50 provoque un écartement des feuilles périphériques découpées situées à la base de l'endive, et un gonflement de ces feuilles ;

par suite de la rotation des rouleaux 2a, 2b, toute la périphérie de l'endive est exposée aux jets d'airs latéraux du dispositif 52, qui réalisent un décollement rapide des feuilles périphériques, évitant que ces feuilles ne se coincent entre l'endive et les rouleaux. Les feuilles sont donc détachées proprement et sont tout à fait récupérables.

Ces feuilles sont emportées par le flux d'air ascendant du poste 6 et évacuées par le conduit 61.

Les postes 3', 4', 5' et 6' étant identiques aux postes 3, 4, 5 et 6 précédemment décrits, il est inutile de les décrire à nouveau ici. A la sortie de ces postes, se trouve un poste 8 qui est représenté schématiquement à la figure 1 ; il comprend un dispositif 80 qui est alimenté par des moyens non représentés par un liquide de traitement de conservation des endives. Ce liquide est par exemple une solution aqueuse d'acide citrique. Ce dispositif est équipé d'une buse de pulvérisation 81 surplombant le trajet des endives.

Nous allons maintenant décrire en nous référant à la figure 1, la manière dont fonctionne l'installation qui vient d'être décrite.

Au poste 0, les endives sont placées manuellement une à une dans les berceaux 2 défilant devant les ouvriers chargés de cette opération ; chaque endive est positionnée différemment sur les rouleaux d'appui, selon qu'il s'agit d'une endive de petite taille, de catégorie non conforme, qu'il s'agit d'une endive normale, ou qu'il s'agit d'une endive grande et/ou possédant un nombre élevé de feuilles impropres à la consommation.

Ainsi, par exemple, comme on peut le voir à la figure 5, l'ouvrier peut disposer les petites endives sur le bord extérieur (tourné vers lui) des berceaux, les endives moyennes au centre des berceaux, et les endives de grande dimension sur le bord interne (tourné vers le convoyeur) de ces berceaux.

Lorsque les berceaux arrivent au poste de détection 7, les cellules photo-électriques sont excitées en fonction de ce positionnement initial ; ainsi, lorsque seule la cellule correspondant au niveau 70 a été excitée, un signal correspondant est envoyé à l'automate programmable AP, lequel va décider de l'évacuation prématurée de cette endive lorsque celle-ci passera au poste 100 ; lorsque deux cellules photo-électriques, correspondant aux niveaux 70 et 71, ont été excitées, l'automate programmable AP décide que cette endive recevra un traitement normal, à une seule coupe. Lorsque les trois cellules photo-électriques correspondant aux trois niveaux 70, 71 et 72 ont été excitées, l'automate programmable décide que cette endive subira une double opération de parement, et mettra en route les postes 3', 4', 5' et 6', lorsque cette endive se présentera à ces postes.

Après avoir franchi le poste 7, les endives arrivent au poste 100, où les endives impropres sont automatiquement éliminées ; à cet effet, l'automate programmable envoie un ordre d'extension au vérin 29, ce qui provoque le soulèvement de la came 27, et l'écartement des rouleaux 2a, 2b qui passent à cet instant devant la came. L'endive tombe donc entre ces rouleaux sur un plan incliné 101 sur lequel elle va rouler, pour se déposer sur un tapis transporteur 102 assurant son évacuation.

Les endives non prématurément évacuées arrivent au poste 3, où elles sont alignées longitudinalement pour venir en appui contre la plaque d'arrêt 30, comme on l'a expliqué en détail plus haut ; quand elles arrivent en vis-à-vis de la lame 40, l'automate programmable déclenche l'extension rapide du vérin 41, provoquant la coupe de la base du pied de l'endive ; la base coupée tombe par gravité dans un récipient 36 placé sous la trajectoire des endives.

Aux postes 5 et 6, les feuilles périphériques impropres (mais éventuellement récupérables) sont arrachées et évacuées par le conduit 61.

Les opérations d'alignement longitudinal, de coupe, d'effeuillage et d'évacuation des feuilles impropres, sont répétées sur les endives devant recevoir un double parement ; au contraire, les endives moyennes, déjà définitivement parées, passent dans les postes auxiliaires 3', 4', 5', et 6', sans que ces postes soient actionnés.

A la fin de cette trajectoire, les endives parées sont aspergées d'un produit conservateur au poste 8 ; au poste 9, elles sont prélevées sur le convoyeur par soulèvement de la came 27 qui écarte les rouleaux d'appui 2a, 2b, et les endives retombent sur une rampe inclinée 90 d'où elles roulent sur un tapis transporteur 91. La rampe 90 est avantageusement revêtue d'une garniture souple, comme les rouleaux d'appui 2a et 2b, cette garniture limitant le risque de blessure superficielle des endives au moment de leur évacuation.

Une installation du genre décrit permet de traiter un nombre d'endives de l'ordre de 60 par minute ; il est possible de grouper dans un même ensemble de traitement plusieurs installations, les endives parées étant recueillies sur un tapis récepteur unique 91 traversant l'ensemble.

Il va de soi que la présente invention n'est pas limitée au seul mode de réalisation préférentiel qui vient d'être décrit à titre d'exemple ; elle en englobe au contraire toutes les variantes.

C'est ainsi par exemple que les moyens de mise en rotation des rouleaux d'appui, prévus aux postes 3 et 5-6 pourraient consister plus simplement en des voies de roulement fixes pour ces rouleaux (au lieu de courroies mobiles).

L'installation pourrait être conçue de telle manière que chaque endive reçoive systèmatiquement une coupe préliminaire de la base du pied, la décision de la nécessité d'une évacuation ou d'une seconde coupe étant prise par un opérateur placé dans un poste d'intervention manuel situé en aval du poste de coupe préliminaire. Une telle conception est utile lorsqu'on a affaire à des catégories d'endives de forme très irrélière qu'il est très difficile voire impossible à mettre en rotation à l'aide des rouleaux d'appui avant la coupe.

Au lieu de prévoir aux postes d'évacuation 6 et 6' des flux d'air ascendants, il serait possible, naturellement, de prévoir des flux d'air descendants en plaçant dans ce cas les ventilateurs au-dessus de la trajectoire des endives et les conduits récupérateurs en dessous de cette trajectoire.

Enfin, il peut être utile de prévoir un poste de nettoyage des rouleaux d'appui, situé entre les postes 9 et O, ce nettoyage étant réalisé par exemple à l'aide d'une brosse rotative placée sous la trajectoire des rouleaux et baignant dans de l'eau.

REVENDICATIONS

_____

1. Installation pour parer des endives ou des légumes similaires, caractérisée par le fait qu'elle comprend un dispositif de convoyage (1) circulant en continu, agencé pour amener une à une les endives à des postes sucessifs d'alignement longitudinal (3), de coupe du pied (4), d'effeuillage superficiel par voie pneumatique (5), d'évacuation des feuilles impropres (6), et de réception des endives parées (9).

2. Installation selon la revendication 1, caractérisée par le fait qu'elle comporte une série auxiliaire de postes d'alignement longitudinal (3'), de coupe du pied (4'), d'effeuillage superficiel par voie pneumatique (5'), et d'évacuation des feuilles arrachées impropres (6'), qui permettent au besoin de réaliser un double parement des endives.

3. Installation selon l'une des revendications 1 ou 2, caractérisée par le fait qu'elle comporte un poste de prélèvement automatique des endives impropres (100), qui est situé en amont dudit poste d'alignement longitudinal (3).

4. Installation selon les revendications 2 et 3 prises en combinaison, caractérisée par le fait qu'elle est équipée d'un dispositif de détection (7) de la longueur des endives et/ou de leur positionnement longitudinal sur le dispositif de convoyage (1), qui est situé en amont du poste de prélèvement (100), ce dispositif étant connecté à un automate programmable (AP) agencé pour commander en cas de besoin le prélèvement prématuré des endives audit poste de prélèvement ou leur double parement par actionnement de ladite série de postes auxiliaires (3', 4', 5', 6').

5. Installation selon l'une des revendications 1 à 4, caractérisée par le fait que le dispositif de convoyage (1) est constitué par une chaîne sans fin mobile (10) qui circule dans un rail de guidage (11), cette chaîne (10) portant une série de berceaux (2) régulièrement répartis le long de la chaîne et adaptés pour recevoir chacun une endive.

6. Installation selon la revendication 5, caractérisée par le fait que chaque berceau (2) est composé d'une paire de rouleaux d'appui (2a, 2b) montés fous sur leur axe ($X_1$, $X_2$), ces rouleaux étant disposés côte à côte, parallèlement l'un à l'autre et perpendiculairement à la direction d'avance du dispositif de convoyage (1).

7. Installation selon la revendication 6, caractérisée par le fait que les rouleaux d'appui (2a, 2b) sont revêtus d'un matériau amortisseur, par exemple d'un manchon en caoutchouc (200a, 200b).

8. Installation selon l'une des revendications 6 ou 7, caractérisée par le fait que chaque rouleau d'appui (2a, 2b) est monté en porte-à-faux sur un levier articulé (21a, 21b), les deux rouleaux d'appui (2a, 2b) d'un même berceau (2) pouvant être écartés l'un de l'autre par pivotement de ces leviers (21a, 21b) vers l'extérieur, à l'encontre de ressorts de rappel (24).

9. Installation selon l'une des revendications 6 à 8, caractérisée par le fait qu'à chaque rouleau d'appui (2a, 2b) est associée une tige (25a, 25b) formant garde-corps.

10. Installation selon la revendication 8, caractérisée par le fait que le poste de réception des endives parées (9) et, éventuellement, le poste de prélèvement des endives impropres (100) sont pourvus d'un dispositif

22

0238430

écarteur comprenant une came mobile (27) apte à coopérer avec des têtons (23a, 23b) solidaires des leviers articulés (21a, 21b), afin d'écarter symétriquement l'un de l'autre les rouleaux d'appui parallèlement à eux-même (2a,2b) et de permettre la chute de l'endive supportée par ces derniers.

11. Installation selon l'une des revendications 6 à 10, caractérisée par le fait que le poste d'alignement longitudinal (3) comprend des premiers moyens pneumatiques (37) adaptés pour insuffler de l'air comprimé sur les endives de manière à les décaler angulairement par rapport à l'axe des rouleaux d'appui (2a, 2b), des seconds moyens (35) commandant la rotation de ces rouleaux d'appui sur leur axe dans un sens tel qu'ils provoquent le déplacement longitudinal des endives, dans la direction où est tournée leur pied, et une plaque d'arrêt (30) disposée le long du rail de guidage (11) de la chaîne de convoyage (10), cette plaque servant de butée d'alignement pour les pieds d'endives.

12. Installation selon la revendication 11, caractérisée par le fait que la plaque d'arrêt (30) est ajustable suivant une direction parallèle à l'axe ($X_1$, $X_2$) des rouleaux (2a, 2b).

13. Installation selon l'une des revendications 1 à 12, caractérisée par le fait que le poste de coupe du pied (4) comprend une lame mobile (40) qui est actionnée par des organes de commande adaptés pour réaliser un mouvement aller-retour à grande vitesse de cette lame au travers des pieds d'endives.

14. Installation selon la revendications 13, caractérisée par le fait que la lame mobile (40) est articulée et que lesdits organes de commande comprennent un jeu de biellettes (45, 46) formant une genouillère, qui est actionné par un vérin pneumatique (41) de telle manière qu'à une seule course aller ou retour de la tige de vérin (410) correspondent les deux courses aller et retour de la lame.

15. Installation selon l'une des revendications 6 à 14, caractérisée par le fait que le poste d'effeuillage superficiel (5) comprend des premiers moyens pneumatiques (50) adaptés pour insuffler de l'air axialement sur l'extrémité coupée des pieds d'endives, des seconds moyens pneumatiques (52) adaptés pour insuffler de l'air latéralement sur le corps des endives, et des moyens (54) de mise en rotation des rouleaux d'appui (2a, 2b) supportant les endives.

16. Installation selon l'une des revendications 1 à 15, caractérisée par le fait que le poste d'évacuation (6) des feuilles arrachées impropres comprend un ventilateur (60) disposée au-dessus ou au-dessous de la trajectoire des endives et agencé pour générer un flux d'air apte à transporter ces feuilles dans un conduit récupérateur (61) disposé de l'autre côté de cette trajectoire.

17. Installation selon l'une des revendications 1 à 16, caractérisée par le fait qu'elle est équipée d'un poste (8) de pulvérisation d'un produit conservateur sur les endives.

18. Installation selon l'une des revendications 1 à 17, caractérisée par le fait que le poste de réception (9) des endives parées et, éventuellement de prélèvement (100) des endives impropres, comprennent une rampe inclinée (90, 101) descendant sur une bande transporteuse (91, 102).

FIG_1

## FIG. 2

## FIG. 3

FIG_4

25b

26

X1,2

2

2b

200b

21a,b

23

22

20

24

10

11

FIG_5

11

72

71

70

2

2b

2a

27

28

29

3/5

0238430

FIG_6

0238430

0238430

## FIG_7

## FIG_8

410 43
42 41 46
45
44 40
E 1
2a 2b

e
40 30
1
2

## FIG_7a

I
41
i
E 40

## FIG_7b

41
40
Ec

## FIG_7c

J
46
41 45
44 j
Ec 40

## FIG_7d

41
40
E' Ec

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 738 258 (R.J. GOODALE)<br>* Colonne 2, ligne 1 - colonne 3, ligne 2; figures 1,5 * | 1 | A 23 N  15/00<br>A 23 N  15/04 |
| A | US-A-3 394 805 (E.E. ROOS et al.)<br>* Colonne 3, ligne 72 - colonne 4, ligne 69; figure 7 * | 1 | |
| A | US-A-3 741 371 (C.G.P. OLDERSHAW et al.) | | |
| A | GB-A-2 151 129 (SYOUZOU SUZUKI) | | |

| | DOMAINES TECHNIQUES RECHERCHES (Int. Cl.4) |
|---|---|
| | A 23 N |

Le présent rapport de recherche a été établi pour toutes les revendications

| Lieu de la recherche | Date d'achèvement de la recherche | Examinateur |
|---|---|---|
| LA HAYE | 25-05-1987 | NEHRDICH H.J |